# FASCICULE DE BREVET EUROPEEN

(11) **EP 2 018 098 B1**
(45) Date de publication et mention de la délivrance du brevet: **27.03.2013**
(21) Numéro de dépôt: 07766014.0
(22) Date de dépôt: 09.05.2007
(51) Int. Cl.: A01G 17/06

(54) **ECARTEUR POUR LE RELEVAGE DE LA VIGNE**
STREUER ZUM ZUSAMMENSCHNÜREN VON WEINSTÖCKEN
SPREADER FOR TYING UP VINES

(30) Priorité: 12.05.2006 FR 0651721; 26.05.2006 FR 0651919
(43) Date de publication de la demande: 28.01.2009
(73) Titulaire: SCDC, Société Anonyme, 51270 Orbais L'Abbaye (FR)
(72) Inventeur: CASTERS, Denis, 51270 Mareuil-en-brie (FR)
(74) Mandataire: Rhein, Alain
(86) Numéro de dépôt international: PCT/FR2007/051234
(87) Numéro de publication internationale: WO 2007/135314

(56) Documents cités:
- EP-A- 1 591 005
- FR-A- 2 832 026

## Description

La présente invention a trait à un écarteur pour le relevage d'une végétation, notamment d'une vigne.

Cette invention concerne le domaine de la fabrication des accessoires pour le traitement et la culture de la végétation et trouvera une application toute particulière lorsqu'il s'agit de procéder au relevage d'une vigne.

Lors de la croissance des sarments d'une telle vigne et du développement de la végétation, il arrive un moment où il est nécessaire de procéder au relevage de cette vigne.

Pour ce faire, il est connu de faire appel à des fils de palissage, s'étendant le long d'une rangée de piquets de vigne, usuellement groupés par paire, et disposés de part et d'autre d'un tel piquet. Ces fils de palissage sont rendus solidaires d'un tel piquet par l'intermédiaire d'un écarteur fixé sur ce piquet, notamment à proximité de son extrémité supérieure. Un tel écarteur peut être réalisé par pliage d'au moins un fil métallique et comporte, usuellement, deux branches présentant, chacune, d'une part, une première extrémité rendue solidaire du piquet de vigne et, d'autre part, une seconde extrémité, dite libre, pourvue d'un moyen pour la réception d'un fil de palissage. Ledit écarteur est conçu en sorte qu'une telle branche puisse adopter au moins deux positions dont une première position (dite position ouverte) dans laquelle une telle branche s'étend latéralement par rapport au piquet ainsi qu'une seconde position dans laquelle cette branche s'étend sensiblement de manière longitudinale par rapport à ce piquet.

Ainsi et lors d'une opération de relevage de la vigne, l'on procède, usuellement de manière manuelle, au relevage des fils de palissage ce qui permet d'amener les branches d'un tel écarteur de la première position d'extension latérale (position ouverte) vers la seconde position d'extension, notamment longitudinale, (dite de relevage) ayant pour effet de rapprocher les extrémités libres des deux branches d'un tel écarteur.

Pour achever l'opération de relevage, ces deux branches sont maintenues dans cette seconde position, soit en disposant une agrafe à cheval par-dessus les fils de palissage, soit en faisant coopérer un crochet équipant une branche de l'écarteur avec l'autre branche de cet écarteur ou avec le fil de palissage associé à cette autre branche.

Ainsi et quelle que soit la manière d'assurer un tel maintien, celle-ci nécessite une intervention manuelle qui, compte tenu de la raideur des branches d'écarteurs et du poids de la végétation, imposent d'exercer un effort conséquent, soit pour relever et maintenir les fils de palissage rapprochés, soit pour réaliser l'accrochage d'un crochet, soit pour mettre en place une agrafe, sans compter le fait que, dans ce cas, l'opérateur en charge du relevage doit conserver à portée de main une réserve d'agrafes, lourde et encombrante, voire un outil spécifiquement adapté à une telle mise en place.

La présente invention se veut à même de remédier aux inconvénients des écarteurs de l'état de la technique, tel celui décrit dans la demande de brevet EP-1.591.005.

A cet effet, l'invention concerne un écarteur pour le relevage d'une végétation, notamment d'une vigne, et comportant, d'une part, un moyen pour son montage sur un piquet, notamment de vigne, d'autre part, au moins une branche présentant une première extrémité solidaire du moyen de montage ainsi qu'une seconde extrémité pourvue d'un berceau pour la réception d'un fil de palissage, une telle branche adoptant une première position dans laquelle celle-ci s'étend sensiblement latéralement par rapport au piquet et une seconde position, dite de relevage, dans laquelle celle-ci s'étend sensiblement longitudinalement par rapport à ce piquet et, d'autre part encore, un moyen pour maintenir au moins une telle branche dans sa position de relevage, caractérisé par le fait que le moyen de maintien est constitué par un moyen pour contenir au moins une telle branche et que l'écarteur comporte un moyen pour faire adopter à ce moyen de maintien une position active de maintien d'une telle branche sous l'effet du relevage des fils de palissage ou d'au moins une telle branche.

Selon une autre caractéristique, l'écarteur comporte un ressort présentant une pluralité de spires dont l'une au moins constitue le moyen de maintien tandis qu'au moins une autre constitue le moyen pour faire adopter à ce moyen de maintien la position active de maintien.

En fait, le ressort définit le moyen de montage de l'écarteur sur un piquet.

Une caractéristique additionnelle consiste en ce que les spires du ressort sont agencées en sorte de conférer au ressort une forme tronconique, une forme de tonneau ou analogue.

Une autre caractéristique concerne le fait que l'écarteur comporte un moyen pour immobiliser le moyen de maintien et/ou le moyen de positionnement dans une position inactive dans laquelle la ou les branches s'étendent latéralement par rapport au piquet.

Les avantages de la présente invention consistent en ce que le moyen de maintien d'une branche en position de relevage est constitué par un moyen pour contenir au moins une telle branche par l'extérieur, un tel moyen étant susceptible de se mettre automatiquement en place pour assurer un tel maintien, ceci sans nécessiter l'intervention manuelle d'un opérateur, mais uniquement sous l'effet du relevage des fils de palissage qui peut être effectué mécaniquement.

Un autre avantage consiste en ce que le moyen de positionnement du moyen de maintien est constitué par un ressort adoptant, d'une part, une position repliée dans laquelle la ou les branches de l'écarteur s'étendent latéralement par rapport au piquet et, d'autre part, une position déployée dans laquelle cette ou ces branches s'étendent sensiblement longitudinalement par rapport à ce piquet. Le passage de la position repliée à la position déployée du ressort se fait automatiquement, de manière progressive, et sous l'impulsion de l'élasticité du ressort, ceci lors de l'opération de relevage des fils de palissage, notamment sans nécessiter une quelconque intervention manuelle.

L'absence d'intervention manuelle pour une telle opération de relevage permet, avantageusement, de procéder à un tel relevage de manière mécanique, en particulier durant la période de traitement de la végétation par des produits chimiques au cours de laquelle la réglementation interdit toute intervention humaine et manuelle sur cette végétation.

Une autre caractéristique avantageuse consiste en ce que le ressort de l'écarteur comporte des spires qui sont agencées en sorte de conférer à ce ressort une forme tronconique, une forme de tonneau ou analogue ce qui permet, avantageusement, d'améliorer la compacité du ressort compressé et/ou la hauteur du ressort comprimé.

Un autre avantage consiste en ce que l'écarteur comporte un moyen pour immobiliser le moyen de maintien et/ou le ressort en position replié, ceci lorsque, avant relevage, la ou les branches adoptent ladite première position dans laquelle une telle branche s'étend latéralement par rapport au piquet. En fait, l'écarteur est conçu en sorte de désactiver le moyen d'immobilisation et, ainsi, de libérer ce ressort pour lui permettre de se déployer, ceci par le seul fait du relevage des fils de plissage.

Finalement, un autre avantage consiste en ce qu'au cours d'une opération de relevage il est possible, d'une part, de désactiver le moyen d'immobilisation et, d'autre part, d'activer le moyen de positionnement d'un écarteur qu'il convient d'amener en position de relevage, ceci avant même que la machine, agissant sur les fils de palissage, n'arrive à la hauteur de cet écarteur.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée de l'écarteur en position ouverte, c'est-à-dire avant relevage de la vigne ;
- la figure 2 est une vue schématisée correspondant à un détail de l'écarteur illustré figure 1 ;
- la figure 3 est une vue schématisée de l'écarteur en position de relevage de la vigne ;
- les figures 4 et 5 sont des vues schématisées correspondant à des détails de l'écarteur illustré figure 3;
- la figure 6 est une vue schématisée d'une branche d'écarteur.

La présente invention concerne le domaine de la fabrication d'accessoires pour le traitement et la culture de la végétation, plus particulièrement de la vigne. Cette invention trouvera une application particulièrement appropriée lorsqu'il s'agit de procéder au relevage d'une telle végétation.

A ce propos, il convient d'observer que si, dans la suite de la description, il sera, essentiellement, fait référence au domaine de la vigne, la présente invention n'y est aucunement limitée et trouvera une application pour toutes les formes de végétation nécessitant une opération de palissage.

En fait, une telle vigne comporte, d'une part, une pluralité de pieds de vigne disposés selon une pluralité de rangées et, d'autre part, un certain nombre de piquets 1 de vigne interposés entre deux pieds de vigne successifs d'une même rangée et, d'autre part encore, des fils de palissage 2, 2' s'étendant, de manière sensiblement parallèle, d'un bout à l'autre d'une telle rangée de pieds de vigne.

Ces fils de palissage 2, 2', usuellement au nombre de deux, sont disposés de part et d'autre des piquets 1 de vigne et sont rendus solidaires d'un tel piquet 1 par le biais d'un écarteur 3.

Pour ce faire et tel que visible sur les figures en annexe, un tel écarteur 3 comporte, alors, un moyen 4 permettant d'assurer son montage sur un tel piquet 1.

Cet écarteur 3 comporte, encore, au moins une branche 5; 5' (mais de préférence deux branches 5 ; 5') présentant deux extrémités 6, 7 dont une première extrémité 6 ; 6' rendue solidaire dudit moyen de montage 4 ainsi qu'une seconde extrémité 7 ; 7' pourvue d'un berceau 8 ; 8' pour la réception d'un fil de palissage 2 ; 2'.

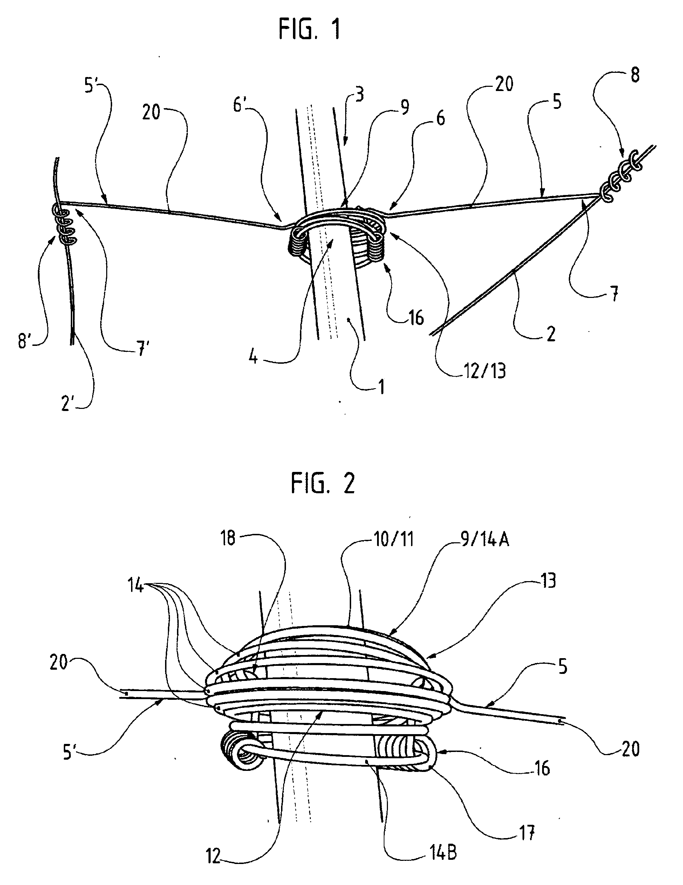

En fait et tel que visible sur les figures 1 et 2, une telle branche 5 ; 5' adopte une première position dans laquelle celle-ci 5 ; 5' s'étend latéralement par rapport au piquet 1 (usuellement de manière sensiblement perpendiculaire par rapport à un tel piquet 1).

Au cours du cycle de développement de la vigne, il est procédé à une opération de relevage de cette vigne, opération pouvant être réalisée de manière manuelle mais qui est, de préférence, réalisée de manière mécanisée.

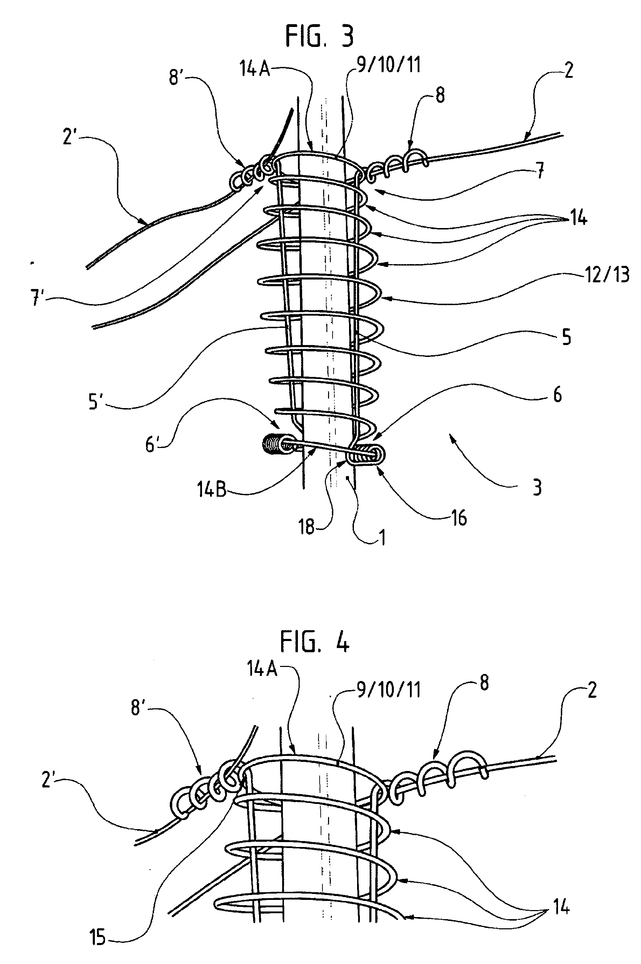

En fait, cette opération consiste à relever les fils de palissage 2, 2' pour les amener dans une position surélevée, dite de relevage, illustrée figures 3 à 5. Dans cette position de relevage, la ou les branches 5 ; 5' de l'écarteur 3 adoptent une seconde position, dite de relevage, dans laquelle ces branches 5 ; 5' s'étend de manière sensiblement longitudinale par rapport au piquet de vigne 1.

Finalement, les fils de palissage 2 ; 2' sont maintenus dans cette position de relevage par le biais d'un moyen 9 que comporte l'écarteur 3 et qui est conçu pour maintenir au moins une des branches 5 ; 5' (voire, et de préférence, les deux) associée à ces fils de palissage 2 ; 2' dans sa position de relevage (figures 3 et 4).

Selon l'invention, ledit moyen 9 de maintien est constitué par un moyen 10 pour contenir au moins une telle branche 5 ; 5', plus particulièrement par l'extérieur.

En fait, un tel moyen de maintien 9 peut adopter, d'une part, une position inactive dans laquelle la ou les branches 5 ; 5' adoptent leur première position susmentionnée (figures 1 et 2) et, d'autre part, une position active de maintien dans laquelle cette ou ces branches 5 ; 5' adoptent leur position de relevage (figures 3 à 5) et sont contenues par ledit moyen 10.

Tel que visible sur les figures 1 à 4 en annexe, ledit moyen 9 de maintien peut être constitué par un cerclage 11 apte à contenir au moins une telle branche 5; 5', voire (et de préférence) les deux branches 5 ; 5' d'un tel écarteur 3.

Selon une autre caractéristique de l'invention, l'écarteur 3 comporte un moyen 12 (dénommé moyen de positionnement 12 dans la suite de la description) conçu pour faire adopter au moyen 9 de maintien ladite position active de maintien d'au moins une branche 5 ; 5' (figures 3 à 5), ceci sous l'effet du relevage des fils de palissage 2 ; 2' ou d'au moins une telle branche 5; 5'.

En fait, ce moyen de positionnement 12 est conçu pour adopter une première position (dite repliée) correspondant à celle dans laquelle la ou les branches 5 ; 5' adoptent leur première position susmentionnée (figures 1 et 2) et dans laquelle le moyen de maintien 9 est en position inactive. Ce moyen de positionnement 12 est, encore, conçu pour adopter une deuxième position (dite de relevage ou déployée) correspondant à la seconde position (position de relevage) de la ou des branches 5 ; 5' dans laquelle ce moyen de positionnement 12 fait adopter au moyen 9 de maintien ladite position active de maintien d'au moins une telle branche 5 ; 5'.

En fait, ce moyen de positionnement 12 est constitué par un élément de type élastique conçu pour entraîner (notamment repousser) ledit moyen de maintien 9 de sa position inactive vers sa position active de maintien.

A ce propos, on observera que ledit écarteur 3 comporte un ressort 13 présentant une pluralité de spires 14 dont l'une au moins (plus particulièrement la spire supérieure 14A) constitue le moyen de maintien 9 (cerclage 11) tandis qu'au moins une autre de ces spires (voire et de préférence, une pluralité d'autres spires) constitue le moyen de positionnement 12 conçu pour faire adopter au moyen de maintien 9 la position active de maintien d'au moins une branche 5 ; 5'.

En fait et tel que visible sur les figures en annexe, ce ressort 13 est engagé autour du piquet de vigne 1 (voire en y étant rendu solidaire par des moyens appropriés) et constitue, alors, un moyen 4 de montage de l'écarteur 3 sur un tel piquet 1.

Selon une autre caractéristique de l'invention, les spires 14 du ressort 13 sont agencées en sorte de conférer à ce ressort 13 une forme tronconique, une forme de tonneau ou analogue. Un tel mode de réalisation permet, avantageusement, d'améliorer la compacité du ressort 13 en position repliée ou compressée.

Selon une caractéristique additionnelle, au moins une branche 5 ; 5' de l'écarteur 3 comporte une butée d'arrêt 15 avec laquelle coopère le moyen de maintien 9 dans sa position active de maintien d'au moins une telle branche 5 ; 5'.

Tel que visible sur la figure 4, une telle butée d'arrêt 15 est, de préférence, définie à proximité de la seconde extrémité 7 ; 7' d'une telle branche 5 ; 5'.

En fait, cette butée d'arrêt 15 est, de préférence, constituée par le berceau 8 ; 8' de réception d'un fil de palissage 2 ; 2'.

A ce propos, on observera qu'un tel berceau 8 ; 8' peut être constitué par une conformation en spirale de la seconde extrémité 7 ; 7' d'une telle branche 5 ; 5'. Une telle spirale présente, de préférence, des spires non jointives facilitant l'introduction d'un fil de palissage 2 ; 2' à l'intérieur d'un tel berceau 8 ; 8'.

Il convient d'observer qu'une telle spirale présente un axe d'extension qui, d'une part, est sensiblement parallèle à la direction d'extension du fil de palissage 2; 2' y engagé et, d'autre part, s'étend selon une direction déterminée (de préférence perpendiculaire) par rapport à la direction d'extension de la branche 5; 5' recevant le berceau 8; 8' en spirale.

Un tel mode de réalisation permet, avantageusement, de maintenir la branche 5; 5' équipée d'un tel berceau 8; 8' dans une même direction par rapport au fil de palissage 2; 2' y associé, ceci quelle que soit la position d'une telle branche 5; 5' et/ou de l'écarteur 3. Un tel maintien évite le basculement d'une telle branche 5; 5' (et, par conséquent, de l'écarteur 3) par rapport au fil de palissage 2; 2', ceci dans la direction d'extension d'un tel fil de palissage 2; 2' et en s'éloignant du piquet 1, plus particulièrement sous le poids de la végétation.

A ce propos, on observera que, de manière générale, il est possible de configurer l'extrémité 7; 7' d'une branche 5; 5' sous la forme d'un tel berceau 8; 8' en spirale du type susmentionné pour n'importe quel type d'écarteur 3, ceci avec les mêmes effets (maintien des branches et/ou de l'écarteur par rapport au fil de palissage, ceci sans basculement par rapport au fil et/ou au piquet). En particulier, une telle conformation peut être définie au niveau d'une branche d'un écarteur autre que celui décrit ci-dessus et présentant un moyen de montage sur un piquet autre que celui susmentionné et adoptant, par exemple, la forme d'une simple boucle ou d'une double boucle s'étendant, soit dans un plan sensiblement parallèle à celui des branches d'un tel écarteur (une telle boucle pouvant recevoir un organe de fixation sur un piquet sous la forme d'un lien ou analogue, notamment comme illustré dans la demande de brevet EP-1.591.005), soit dans un plan formant un angle, notamment droit, avec le plan d'extension des branches (une telle boucle pouvant alors être engagée autour d'un piquet, notamment comme illustré dans la demande de brevet EP-0.876.756).

Selon une caractéristique additionnelle, l'enroulement de la spirale est orienté de manière à diverger par rapport au piquet 1 en position de relevage d'une branche 5; 5' et, donc, de l'écarteur 3, ceci pour une prise d'appui du moyen 9 de maintien sur la butée d'arrêt 15.

Une autre caractéristique consiste en ce que la première extrémité 6 ; 6' d'une branche 5 ; 5' est rendue solidaire du moyen de positionnement 12 par l'intermédiaire d'un moyen d'articulation 16 de cette branche 5 ; 5' par rapport à ce moyen de positionnement 12.

La présence de ce moyen d'articulation 16 permet, avantageusement, à une telle branche 5 ; 5' de pivoter par rapport audit moyen de positionnement 12 pour passer de sa première position (figure 1 et 2) à sa seconde position (figures 3 à 5) de relevage.

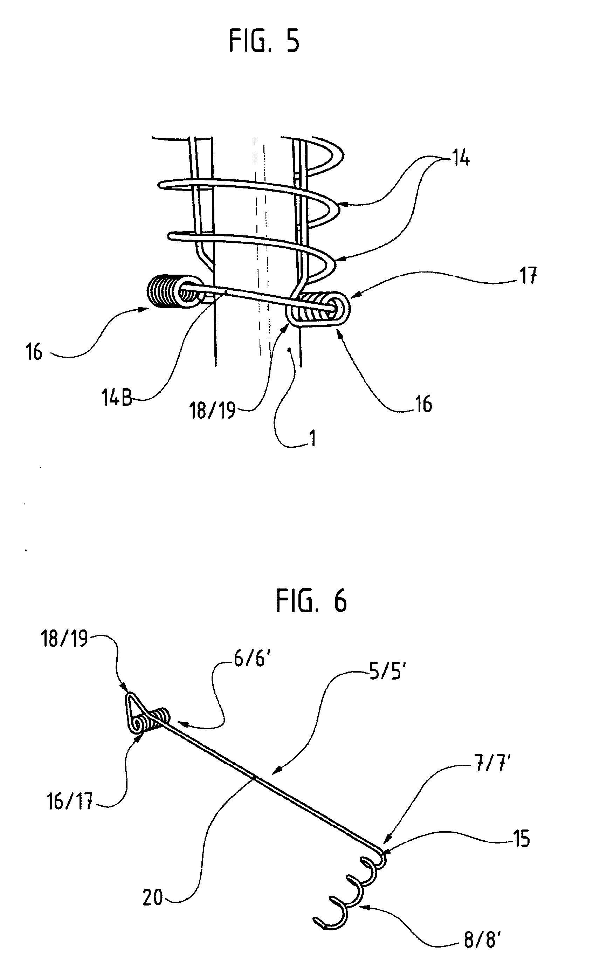

En fait et tel que visible sur les figures 2 et 5, la première extrémité 6 ; 6' d'une telle branche 5 ; 5' est rendue solidaire d'une spire 14 du ressort 13, plus particulièrement de la spire inférieure 14B de ce ressort 13, ceci par l'intermédiaire dudit moyen d'articulation 16.

A ce propos, on observera qu'un tel moyen d'articulation 16 est constitué par une conformation en spirale 17, notamment à spires jointives, de la première extrémité 6 ; 6' de la branche 5 ; 5'. C'est, plus particulièrement, à l'intérieur de cette spirale 17 que s'étend une partie du moyen de positionnement 12, plus particulièrement une partie d'une spire 14 (notamment une partie de la spire inférieure 14B).

Une autre caractéristique concerne le fait que l'axe de la spirale 17 s'étend de manière sensiblement perpendiculaire à l'axe d'extension de la branche 5 ; 5'.

Selon une autre caractéristique, l'écarteur 3 comporte un moyen 18 pour immobiliser le moyen de maintien 9 et/ou le moyen de positionnement 12 dans une position inactive de maintien dans laquelle la ou les branches 5; 5' adoptent leur première position (figures 1 et 2) et s'étendent latéralement par rapport au piquet 1.

En fait, ce moyen d'immobilisation 18 est conçu apte à être désactivé sous l'effet d'un relevage des fils de palissage 2; 2' ou d'au moins une telle branche 5 ; 5'.

A ce propos, on observera qu'au cours d'un tel relevage, la ou les branches 5 ; 5 sont entraînées par les fils de palissage 2 ; 2' et pivotent conformément au moyen d'articulation 16, ceci à partir de leur première position et en direction de leur position de relevage.

Au cours de ce mouvement, d'une part, le moyen d'immobilisation 18 se désactive et libère le moyen de maintien 9 et/ou le moyen de positionnement 12 et, d'autre part, le moyen de positionnement 12 se déploie automatiquement et sous l'effet de son élasticité en direction de sa position active de maintien du moyen de maintien 9, ceci en entraînant ce moyen de maintien 9.

Une caractéristique additionnelle consiste en ce que le moyen d'immobilisation 18 peut être constitué par un crochet 19 ou analogue que comporte au moins une branche 5 ; 5' de l'écarteur 3. Un tel crochet 19 est défini, de préférence, à proximité de la première extrémité 6 ; 6' d'une telle branche 5 ; 5'.

En fait, ledit crochet 19 est défini dans le prolongement du moyen d'articulation 16 et selon une direction sensiblement perpendiculaire à l'axe de pivotement de ce moyen d'articulation 16.

Selon une autre caractéristique, un tel moyen d'immobilisation 18 est prolongé par une portion 20 sensiblement rectiligne que comporte ladite branche 5 ; 5' et qui présente, au niveau de son extrémité libre distale, un berceau 8; 8' pour la réception d'un fil de palissage 2 ; 2'.

Selon une caractéristique additionnelle de l'invention, la ou les branches 5 ; 5' de l'écarteur 3 sont définie par un fil métallique conformé (plus particulièrement par pliage, cintrage ou analogue) de manière à ce qu'il présente :
- le berceau 8 ; 8' ;
- le moyen d'articulation 16;
- le moyen d'immobilisation 18;
tels que décrits ci-dessus et tel que visible figures 6.

## Revendications

1. Ecarteur (3) pour le relevage d'une végétation, notamment d'une vigne, et comportant, d'une part, un moyen (4) pour son montage sur un piquet (1), notamment de vigne, d'autre part, au moins une branche (5; 5') présentant une première extrémité (6; 6') solidaire du moyen de montage (4) ainsi qu'une seconde extrémité (7; 7') pourvue d'un berceau (8; 8') pour la réception d'un fil de palissage (2; 2'), une telle branche (5; 5') adoptant une première position dans laquelle celle-ci (5; 5') s'étend sensiblement latéralement par rapport au piquet (1) et une seconde position, dite de relevage, dans laquelle celle-ci (5; 5') s'étend sensiblement longitudinalement par rapport à ce piquet (1) et, d'autre part encore, un moyen (9) pour maintenir au moins une telle branche (5; 5') dans sa position de relevage, **caractérisé par le fait que** le moyen de maintien (9) est constitué par un moyen (10) pour contenir au moins une telle branche (5; 5') et que l'écarteur (3) comporte un moyen (12) pour faire adopter à ce moyen de maintien (9) une position active de maintien d'une telle branche (5; 5') sous l'effet du relevage des fils de palissage (2; 2') ou d'au moins une telle branche (5; 5').

2. Ecarteur (3) selon la revendication 1, **caractérisé par le fait que** le moyen (9) de maintien est défini par un cerclage (11) tandis que le moyen (12) pour faire adopter à ce cerclage (11) la position active de maintien est constitué par un moyen de type élastique.

3. Ecarteur (3) selon l'une quelconque des revendications précédentes, **caractérisé par le fait qu'**il comporte un ressort (13) présentant une pluralité de spires (14) dont l'une au moins (14A) constitue le moyen de maintien (9) tandis qu'au moins une autre (14B) constitue le moyen (12) pour faire adopter à ce moyen de maintien (9) la position active de maintien.

4. Ecarteur (3) selon la revendication 3, **caractérisé par le fait que** le ressort (13) définit le moyen de montage (4) de l'écarteur (3) sur un piquet (1).

5. Ecarteur (3) selon l'une quelconque des revendications 3 ou 4, **caractérisé par le fait que** les spires (14) du ressort (13) sont agencées en sorte de conférer au ressort (13) une forme tronconique, une forme de tonneau ou analogue.

6. Ecarteur (3) selon l'une quelconque des revendications précédentes, **caractérisé par le fait qu'**au moins une branche (5; 5') de l'écarteur (3) comporte une butée d'arrêt (15), notamment constituée par le berceau (8; 8') de réception d'un fil de palissage (2; 2'), avec laquelle coopère le moyen de maintien (9) dans sa position active de maintien.

7. Ecarteur (3) selon l'une quelconque des revendications précédentes, **caractérisé par le fait que** la première extrémité (6; 6') d'une branche (5; 5') est rendue solidaire du moyen de positionnement (12) par l'intermédiaire d'un moyen d'articulation (16) de cette branche (5; 5') par rapport à ce moyen de positionnement (12).

8. Ecarteur (3) selon la revendication 7, **caractérisé par le fait que** le moyen d'articulation (16) est constitué par une conformation en spirale (17), notamment à spires jointives, de la première extrémité (6; 6') de la branche (5; 5') et à l'intérieur de laquelle s'étend une partie du moyen de positionnement (12).

9. Ecarteur (3) selon l'une quelconque des revendications précédentes, **caractérisé par le fait que** l'écarteur (3) comporte un moyen (18) pour immobiliser le moyen de maintien (9) et/ou le moyen de positionnement (12) dans une position inactive dans laquelle la ou les branches (5; 5') s'étendent latéralement par rapport au piquet (1).

10. Ecarteur (3) selon la revendication 9, **caractérisé par le fait que** le moyen d'immobilisation (18) est constitué par un crochet (19) que comporte au moins une branche (5; 5') de l'écarteur (3) et qui est défini, de préférence, à proximité de la première extrémité (6; 6') de cette branche (5; 5').

11. Ecarteur (3) selon les revendications 7 et 9, **caractérisé par le fait que** le moyen d'immobilisation (18) est défini dans le prolongement du moyen d'articulation (16) et selon une direction sensiblement perpendiculaire à l'axe de pivotement de ce moyen d'articulation (16).

12. Ecarteur (3) selon l'une quelconque des revendications précédentes, **caractérisé par le fait que** le berceau (8; 8') est constitué par une conformation en spirale de la seconde extrémité (7 ; 7') d'une branche (5 ; 5'), une telle spirale présentant, de préférence, des spires non jointives.

## Claims

1. Spreader (3) for tying up vegetation, namely a vine, and including, on the one hand, a means (4) for mounting same on a stake (1), namely a vine, on the other hand, at least one branch (5; 5') having a first end (6; 6') integral with the mounting means (4) as well as a second end (7; 7') provided with a cradle (8; 8') for receiving a tying-up wire (2; 2'), such a branch (5; 5') adopting a first position, in which it (5; 5') extends substantially laterally with respect to the stake (1) and a second position, referred to as tying-up position, in which it (5; 5') extends substantially longitudinally with respect to this stake (1) and, yet on the other hand, a means (9) for maintaining at least such a branch (5; 5') in its tying-up position, wherein the means for maintaining (9) is formed of a means (10) for containing at least such a branch (5; 5') and the spreader (3) includes a means (12) for causing this means for maintaining (9) to adopt an active position for maintaining such a branch (5; 5') under the action of tying up of the tying-up wires (2; 2') or at least such a branch (5; 5').

2. Spreader (3) according to claim 1, wherein the means (9) for maintaining is defined by a tightening ring (11), while the means (12) for causing this tightening ring (11) to adopt the active maintaining position is formed of an elastic means.

3. Spreader (3) according to any of the preceding claims, wherein the spreader includes a spring (13) having a plurality of spires (14), at least one of which (14A) forms the means (9) for maintaining while at least another one (14B) forms the means (12) for causing this means (9) for maintaining to adopt the active maintaining position.

4. Spreader (3) according to claim 3, wherein the spring (13) defines the means for mounting (4) the spreader (3) on a stake (1).

5. Spreader (3) according to any of claims 3 or 4, wherein the spires (14) of the spring (13) are arranged so as to provide the spring (13) with a truncated shape, a barrel-like shape or the like.

6. Spreader (3) according to any of the preceding claims, wherein at least one branch (5; 5') of the spreader (3) includes a stop (15), namely formed by the cradle (8; 8') for receiving a tying-up wire (2 ; 2' ), which the means for maintaining (9) cooperates with in its active maintaining position.

7. Spreader (3) according to any of the preceding claims, wherein the first end (6; 6') of a branch (5; 5') is made integral with the positioning means (12) through a means for hinging (16) this branch (5; 5') with respect to this positioning means (12).

8. Spreader (3) according to claim 7, wherein the hinging means (16) is formed by a spiral-like shape (17), namely with jointed spires, of the first end (6; 6') of the branch (5; 5') and inside which part of the positioning means (12) extends.

9. Spreader (3) according to any of the preceding claims, wherein the spreader (3) includes a means (18) for immobilizing the means for maintaining (9) and/or the positioning means (12) in an inactive position, in which the branch or branches (5; 5') extend laterally with respect to the stake (1).

10. Spreader (3) according to claim 9, wherein the immobilization means (18) is formed of a hook (19) at least one branch (5; 5') of the spreader (3) includes and which is preferably defined proximate the first end (6; 6') of this branch (5; 5').

11. Spreader (3) according to claims 7 and 9, wherein the immobilization means (18) is defined in the extension of the hinging means (16) and in a direction substantially perpendicular to the axis of pivoting of this hinging means (16).

12. Spreader (3) according to any of the preceding claims, wherein the cradle (8; 8') is formed by a spiral-like shape of the second end (7 ; 7') of a branch (5 ; 5'), such a spiral having preferably non-jointed spires.

## Patentansprüche

1. Streuer (3) zum Zusammenschnüren von Rankpflanzen, insbesondere von Weinreben, und umfassend, einerseits, ein Mittel (4) zu seiner Befestigung an einem Pfahl (1), insbesondere an einem Rebpfahl, andererseits, zumindest ein sich abgabelndes Teilstück (5; 5'), das ein erstes Ende (6; 6') aufweist, das mit dem Befestigungsmittel (4) einstückig festverbunden ist, und ein zweites Ende (7; 7'), das mit einem Stützbereich (8; 8') für die Aufnahme eines Anbinddrahtes (2; 2') versehen ist, wobei ein solches sich abgabelndes Teilstück (5; 5') eine erste Position, in welcher es (5; 5') sich im Wesentlichen seitlich hinsichtlich des Rebpfahls (1) erstreckt, und eine zweite Position, die als Zusammenschnürstellung bezeichnet wird, in welcher sich dieses letztere (5; 5') im Wesentlichen längs hinsichtlich des Rebpfahls (1) erstreckt, einnimmt, und, andererseits noch, ein Mittel (9) zum Halten von zumindest einem solchen sich abgabelnden Teilstück (5; 5') in seiner Zusammenschnürstellung, **dadurch gekennzeichnet, dass** das Mittel zum Halten (9) durch ein Mittel (10) für die Aufnahme von zumindest einem solchen sich abgabelnden Teilstück (5; 5') gebildet ist, und dass der Streuer (3) ein Mittel (12) umfasst, um dieses Haltemittel (9) eine aktive Position zum Halten eines solchen sich abgabelnden Teilstücks (5; 5') unter der Wirkung des Zusammenschnüren der Anbinddrahtes (2; 2') oder zumindest eines solchen sich abgabelnden Teilstücks (5; 5') einnehmen zu lassen.

2. Streuer (3) nach Anspruch 1, **dadurch gekennzeichnet, dass** das Mittel (9) zum Halten durch eine Umschlingung (11) gebildet ist, während das Mittel (12), um diese Umschlingung (11) eine aktive Halteposition einnehmen zu lassen, durch ein elastisches Mittel gebildet ist.

3. Streuer (3) nach irgendeinem der vorgehenden Ansprüche, **dadurch gekennzeichnet, dass** dieser eine Feder (13) umfasst, die eine Vielzahl von Windungen (14) aufweist, von denen zumindest die eine (14A) das Haltemittel (9) bildet, während zumindest eine andere (14B) das Mittel (12), um dieses Haltemittel (9) die aktive Halteposition einnehmen zu lassen, bildet.

4. Streuer (3) nach Anspruch 3, **dadurch gekennzeichnet, dass** die Feder (13) das Mittel zur Befestigung (4) des Streuers (3) an einem Rebpfahl (1) bildet.

5. Streuer (3) nach irgendeinem der Ansprüche 3 oder 4, **dadurch gekennzeichnet, dass** die Windungen (14) der Feder (13) derart angeordnet sind, um der Feder (13) eine kegelstumpfartige, fassartige oder ähnliche Gestaltungsform zu verleihen.

6. Streuer (3) nach irgendeinem der vorgehenden Ansprüche, **dadurch gekennzeichnet, dass** zumindest ein sich abgabelndes Teilstück (5; 5') des Streuers (3) einen Anschlag (15) umfasst, der insbesondere durch den Stützbereich (8; 8') für die Aufnahme eines Anbinddrahtes (2; 2') gebildet ist, mit welchem das Haltemittel (9) in seiner aktiven Halteposition zusammenwirkt.

7. Streuer (3) nach irgendeinem der vorgehenden Ansprüche, **dadurch gekennzeichnet, dass** das erste Ende (6; 6') eines sich abgabelnden Teilstücks (5; 5') mit dem Positionierungsmittel (12) einstückig über ein Mittel (16) zur Gelenkverbindung dieses sich abgabelnden Teilstücks (5; 5') hinsichtlich dieses Positionierungsmittels (12) festverbunden ist.

8. Streuer (3) nach Anspruch 7, **dadurch gekennzeichnet, dass** das Mittel zur Gelenkverbindung (16) durch eine wendelförmige Ausgestaltung (17) insbesondere mit nebeneinanderliegenden Windungen des ersten Endes (6; 6') des sich abgabelnden Teilstücks (5; 5') gebildet ist, und in deren Innern sich ein Teil des Positionierungsmittels (12) erstreckt.

9. Streuer (3) nach irgendeinem der vorgehenden Ansprüche, **dadurch gekennzeichnet, dass** der Streuer (3) ein Mittel (18) umfasst, um das Haltemittel (9) und / oder das Positionierungsmittel (12) in einer nicht aktiven Position unbeweglich zu machen, in welcher das bzw. die sich abgabelnden Teilstücke (5; 5') sich seitlich hinsichtlich des Rebpfahls (1) erstrecken.

10. Streuer (3) nach Anspruch 9, **dadurch gekennzeichnet, dass** das Mittel zur Unbeweglichmachung (18) durch einen Haken (19) gebildet ist, welchen zumindest ein sich abgabelndes Teilstück (5; 5') des Streuers (3) umfasst, und der vorzugsweise in der Nähe von dem ersten Ende (6; 6') dieses sich abgabelnden Teilstücks (5; 5') gebildet ist.

11. Streuer (3) nach den Ansprüchen 7 und 9, **dadurch gekennzeichnet, dass** das Mittel zur Unbeweglichmachung (18) in der Verlängerung des Gelenkmittels (16) und in einer Richtung im Wesentlichen senkrecht zu der Schwenkachse dieses Gelenkmittels (16) gebildet ist.

12. Streuer (3) nach irgendeinem der vorgehenden Ansprüche, **dadurch gekennzeichnet, dass** der Stützbereich (8; 8') durch eine wendelförmige Ausgestaltung des zweiten Endes (7; 7') eines sich abgabelnden Teilstücks (5; 5') gebildet ist, wobei eine solche Wendel vorzugsweise nicht nebeneinanderliegende Windungen aufweist.
